# EUROPEAN PATENT APPLICATION

(11) **EP 1 278 265 A2**
(43) Date of publication of application: **22.01.2003**
(21) Application number: 02254982.8
(22) Date of filing: 16.07.2002
(51) Int. Cl.: H01P 1/213

(54) **Highly integrated planar stacked millimeter wave transceiver**

(30) Priority: 17.07.2001 US 908451
(71) Applicant: Netro Corporation, San Jose, CA 95134-1702 (US)
(72) Inventor: Levitt, Leslie, San Jose, California 95112 (US); Bratherton, John R., Gillamoor, York Y06 6HX (GB)
(74) Representative: Freeman, Jacqueline Carol

(57) **Abstract**

An integrated radio transceiver assembly includes a waveguide filter assembly, a millimeter wave transceiver printed circuit board mounted atop the filter assembly, and a cover plate mounted atop the waveguide filter assembly and enclosing the printed circuit board.

## Description

### Field of Invention

The invention relates to radio transceivers and more specifically to a highly integrated planar stacked millimeter wave transceiver.

### Background

An outdoor radio unit for a wireless network includes an antenna, a millimeter wave transceiver assembly, an intermediate frequency (IF) module, and a power supply and radio unit controller. The radio is connected to indoor electronics through a single coaxial cable that carries DC power, telemetry, a synthesizer reference frequency, and modulated transmit (TX) and receive (RX) carriers at low IF frequencies. The power supply converts the input DC voltage to lower voltages used within the radio. The controller includes a microprocessor that communicates with the indoor electronics and functions to monitor and control the outdoor radio unit. The IF module includes a multiplexer which separates the signals running up and down the cable that connects to the indoor electronics. The IF module also includes up- and down-converters (e.g., mixers) which translate the RF signals between the frequencies compatible with the indoor electronics and the millimeter wave transceiver assembly. Transmit power control and receive gain leveling are also accomplished in the IF module. One such outdoor radio unit is the subscriber radio unit (SRU) available from Netro Corporation of San Jose, California. The millimeter wave transceiver assembly is described below.

The millimeter wave transceiver assembly is constructed from several subassemblies. The millimeter wave transceiver assembly consists mainly of a base-plate. The base-plate includes cutouts for receiving individual printed circuit boards having a synthesizer, an up-converter, and a down-converter. The up-converter mixes IF signals at, e.g., 3 GHz from the IF module with the synthesizer output to generate and pass millimeter wave signals (TX signals) to the antenna. The synthesizer output is an agile local oscillator at, e.g., 25 - 25.5 GHz. The down-converter mixes the received millimeter wave signals (RX signals) with the synthesizer output to recover and pass IF signals at, e.g., 2 GHZ to the IF module. A synthesizer cover is mounted atop the base-plate to enclose the printed circuit board.

The base-plate includes two waveguide filters for receiving and transmitting millimeter wave signals. The waveguide filters are located adjacent to the printed circuit boards on the base-plate. The waveguide filters are coupled to the antenna at a common port. A first waveguide filter passes only the RX signals at a specific frequency range (e.g., 27-27.5 GHz) from the antenna to a low noise amplifier (LNA). The LNA is enclosed in its own housing and mounted to one side of the base-plate. The LNA amplifies the RX signals and passes them to an RX image filter. The RX image filter passes filtered RX signals to the down converter.

The up-converter passes the TX signals to a TX filter. The TX filter passes filtered TX signals to a power amplifier (PA). Like the LNA, the PA is enclosed in its own housing and mounted to the side of the base-plate. The PA amplifies and then passes the TX signals to a second waveguide filter. The second waveguide filter passes only the TX signals at a specific frequency band (e.g., 28-28.5 GHz) from the PA to the antenna. The filter assembly that includes the two waveguide filters in the TX and RX paths coupled to a common antenna port is commonly referred to as a diplexer or a duplexer. A diplexer cover is mounted atop the base-plate to enclose the waveguide filters, the RX image filter, and the TX filter.

As described above, the millimeter wave transceiver assembly consists of several subassemblies. The number of subassemblies increases the material and the labour costs to manufacture the millimeter wave transceiver assembly.

According to one aspect of the present invention there is provided an integrated radio transceiver comprising: a waveguide filter assembly; a filter millimeter wave transceiver printed circuit board mounted atop the filter assembly; and a cover plate mounted atop the waveguide filter assembly and enclosing the first millimeter wave transceiver printed circuit board.

According to a second aspect of the invention there is provided a method for assembling a transceiver comprising: mounting a top plate atop a bottom plate to form a waveguide filter assembly; mounting a first millimeter wave transceiver printed circuit board atop the waveguide filter assembly; and mounting a cover plate atop the waveguide filter assembly to enclose the first millimeter wave transceiver printed circuit board.

In one embodiment of the invention, an integrated transceiver assembly includes a waveguide filter assembly, a first millimeter wave transceiver printed circuit board mounted atop the filter assembly (hereafter "first PCB"), and a cover plate mounted atop the waveguide filter assembly and enclosing the first PCB.

In this embodiment the waveguide filter assembly includes a top plate mounted atop a bottom plate. The bottom plate may include an antenna port, a first channel coupled to the antenna port, and a second channel coupled to the antenna port. The antenna port can be coupled to an antenna to receive and transmit millimeter wave signals. The first and the second channels respectively may include first and second pluralities of irises.

The top plate may include an RX port, a third channel coupled to the RX port, a TX port, and a fourth channel coupled to the TX port. The third and fourth channels respectively may include third and fourth pluralities of irises.

The first channel, the third channel, and their irises may define a first waveguide filter in communication with the antenna port and the RX port. The second channel, the fourth channel, and their irises may define a second waveguide filter in communication with the antenna port and the TX port.

The filters formed in the first and the second channels allow specific bands of millimeter wave signals to pass between the antenna port and the RX or TX port. The first and second channels may further include a plurality of screw holes for receiving tuning screws. Each screw hole is located between two irises. The tuning screws make up for machining tolerances by providing a way to fine tune the resonator frequencies so the desired filter passband, stopband, and return loss characteristics are met. Resonator coupling may be fixed, i.e. not adjustable, based on the iris heights machined into the first and second channels.

The first PCB may include a local oscillator chain, a receive chain and a transmit chain. The local oscillator chain includes a frequency multiplier, an amplifier coupled to the frequency multiplier, and a power splitter. The amplifier can be surface mounted to the first printed circuit board.

The receive chain may include a low noise amplifier coupled to the RX port of the waveguide filter assembly, an RX filter coupled to the low noise amplifier, and a down-converter coupled to the RX filter and the power splitter.

The low noise amplifier and the down-converter can be surface mounted on the first PCB. The first PCB can be devoid of a metal backing. The RX filter can be a microstrip suspended over a depression on the top plate of the waveguide filter assembly.

The down-converter may include an RX IF line that carries IF signals recovered from millimeter wave signals. The first PCB can include a pin coupled to the RX IF line. The top and the bottom plates can include corresponding bores that allow the pin to pass through for a plug-in connection to an IF module.

The cover plate may include a cutout where a down-converter cover mounts through to enclose at least the low noise amplifier, the RX image filter, and the down-converter.

The transmit chain may include a up-converter coupled to the amplifier and an TX IF line, a TX filter coupled to the up-converter, and a power amplifier module coupled to the TX filter and the TX port of the waveguide filter assembly. The power amplifier module includes a variable attenuator and a power amplifier.

The up-converter can be surface mounted to the first printed circuit board. The power amplifier module can be coupled to the TX filter via gap welded ribbon. The TX filter includes a microstrip suspended over a depression on the top plate of the waveguide filter assembly.

The first PCB can include a pin coupled to the TX IF line. The top and bottom plates can include corresponding bores that allow the pin to pass through for a plug-in connection to an IF module. The first PCB can further include a pin coupled to the variable attenuator. The top and the bottom plates can include corresponding slots that allow the pin to pass through for a plug-in connection to an IF module to receive a control voltage.

The cover plate may include a cutout that the up-converter cover mounts through to enclose at least the up-converter, the TX filter, and the power amplifier module.

The integrated transceiver assembly can further include a second printed circuit board (hereafter "second PCB") mounted atop the waveguide filter assembly. The second PCB includes a synthesizer circuit and a voltage control oscillator coupled to the synthesizer circuit and the frequency multiplier of the first PCB.

The synthesizer circuit and the voltage control oscillator can be surface mounted on the second PCB.

The second PCB can include pins coupled to the synthesizer circuit. The top and the bottom plates can further include corresponding slots that the pins pass through for plug-in connections to an IF module to receive a reference signal. The top and the bottom plates can further include corresponding slots that the pins pass through for plug-in connections to the IF module to receive control and alarm signals.

The first PCB can further include pins coupled to the elements of the first and the second printed circuit board. The top and the bottom plates can further include corresponding slots that the pins pass through for plug-in connections to a power supply to receive power.

### Brief Description of Figures

FIG. 1A illustrates an exploded view of a millimeter wave transceiver assembly.

FIG. 1B and 1C respectively illustrate top and bottom views of the transceiver assembly of FIG. 1A.

FIGS. 2A, 2B, and 2C respectively illustrate top, bottom, and side views of a bottom plate of a waveguide filter assembly of FIG. 1A.

FIG. 2D illustrates a cross-section view of a portion of the channels on the bottom plate of FIGS. 2A, 2B, and 2C.

FIGS. 2E and 2F respectively illustrate cross-section and top views of an iris in the channels on the bottom plate of FIGS. 2A, 2B, and 2C.

FIG. 3A, 3B, and 3C respectively illustrate top, bottom, and side views of a top plate of the waveguide filter assembly of FIG. 1A.

FIG. 4 illustrates a block diagram of a millimeter wave transceiver.

FIG. 5 illustrates a first printed circuit board and a second printed circuit board implementing part of the transceiver circuit of FIG. 4.

FIG. 6 illustrates a power amplifier module (including a power amplifier and a variable attenuator) mounted on the first printed circuit board of FIG. 5.

FIGS. 7A and 7B respectively illustrate bottom and side views of a cover plate of the transceiver assembly of FIG. 1A.

FIG. 7C illustrates another bottom view of the cover plate of the transceiver assembly of FIG. 1A.

FIG. 7D illustrates a portion the cover plate of the transceiver assembly of FIG. 7C.

FIGS. 8A, 8B, and 8C respectively illustrate bottom, side, and top views of a down-converter cover plate of FIG. 1A.

FIG. 8D illustrates another bottom view of the down-converter cover plate of the transceiver assembly of FIG. 1A.

FIGS. 9A, 9B, and 9C respectively illustrate bottom, side, and top views of an up-converter cover plate of FIG. 1A.

FIG. 9D illustrates another bottom view of the up-converter cover plate of the transceiver assembly of FIG. 1A

### Detailed Description

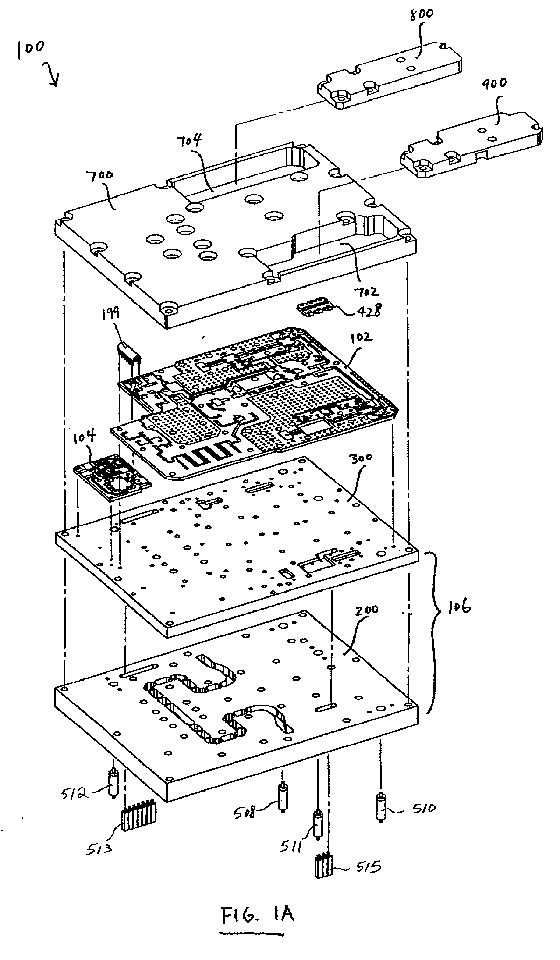

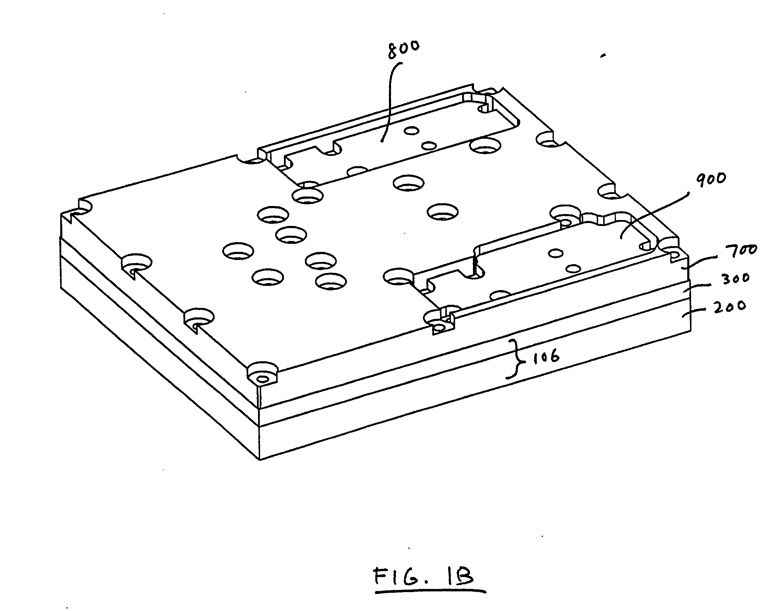

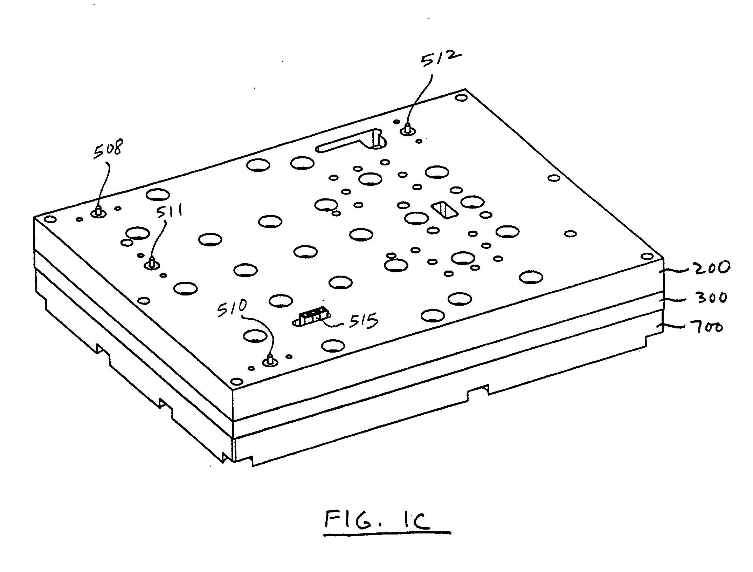

FIG. 1A illustrates an exploded view of a millimeter wave transceiver assembly 100 in accordance with embodiments of the invention. Assembly 100 can be mounted atop an IF module (not shown).

Assembly 100 includes printed circuit boards 102 and 104 mounted atop a waveguide filter assembly 106. In some embodiments, waveguide filter assembly 106 includes a top plate 300 mounted atop a bottom plate 200. Waveguide filter assembly 106 is, e.g., of a split e-plane topology.

Please note dimensions (in inches) illustrated in the figures of the present disclosure are illustrative of one embodiment of assembly 100. One skilled in the art can modify the dimensions to suit the actual implementation (e.g., to suit the radio band used).

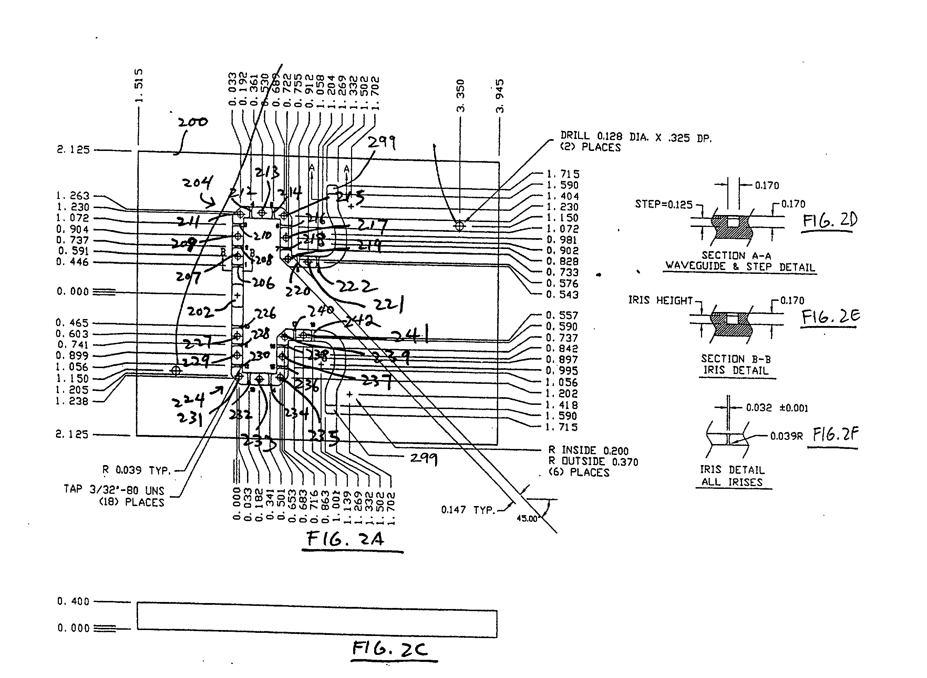

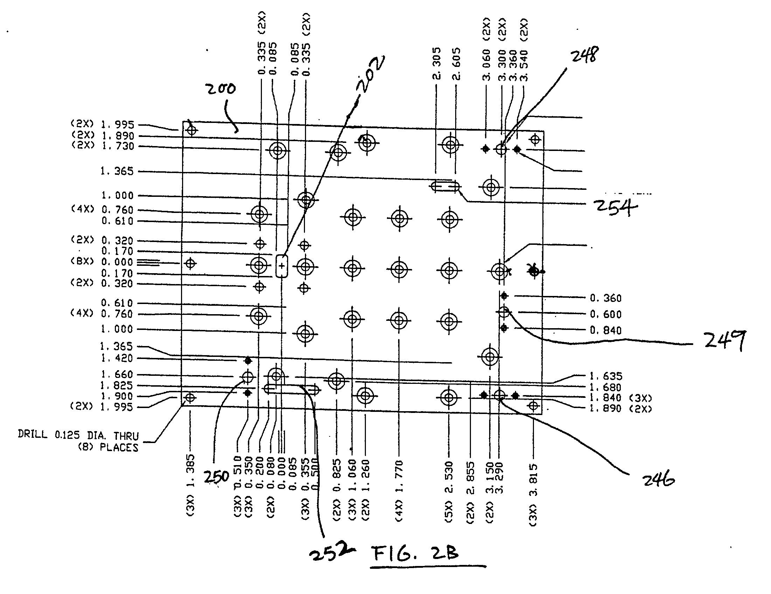

FIGS. 2A, 2B, and 2C respectively illustrate top, bottom, and side views of bottom plate 200. Bottom plate 200 includes a bore 202 (hereafter "antenna port 202") for coupling a conventional millimeter wave antenna to transmit and receive millimeter wave signals.

As shown in FIG. 2A, bottom plate 200 includes channels 204 and 224 with rectangular cross-sections. Channel 204 includes rectangular protrusions (hereafter "irises") 206, 208, 210, 212, 214, 216, 218, 220, and 222. One or more irises define an entry area into a cavity defined by adjacent irises on plates 200 and 300. Channel 204 also includes tuning screw holes 207, 209, 211, 213, 215, 217, 219, and 221. Tuning screw holes are located between two adjacent irises on plate 200. Similarly, channel 224 includes irises 226, 228, 230, 232, 234, 236, 238, 240, and 242. Channel 224 also includes tuning screw holes 227, 229, 231, 233, 235, 237, 239, and 241.

As will be described later, channel 204 serves as part of a first waveguide filter from antenna port 202 to printed circuit board (PCB) 102 while channel 224 serves as part of a second waveguide filter from PCB 102 to antenna port 202. Tuning screws inserted into tuning screw holes are adjusted to vary the resonant frequencies of the cavities which form the filter. Dimensions of one embodiment of channels 204 and 224 are provided in the Table 1 below.

**Table 1**

| Iris # | Height (inches) |
|---|---|
| 206 | 0.119 |
| 208 | 0.110 |
| 210 | 0.1165 |
| 212 | 0.118 |
| 214 | 0.118 |
| 216 | 0.118 |
| 218 | 0.1165 |
| 220 | 0.110 |
| 222 | 0.126 |
| 226 | 0.131 |
| 228 | 0.113 |
| 230 | 0.120 |
| 232 | 0.121 |
| 234 | 0.121 |
| 236 | 0.121 |
| 238 | 0.120 |
| 240 | 0.113 |
| 242 | 0.134 |
| | |

| Step # | Height (inches) |
|---|---|
| 299 | 0.125 |

FIG. 2B illustrates the locations of various mounting holes on bottom plate 200 for securing it to the remainder of assembly 100. Bottom plate 200 is thin (e.g., about 0.4 inches). This allows the mounting holes to be rapidly drilled and tapped through bottom plate 200 for easy manufacturing. Similarly, top plate 300, cover plate 700, down-converter cover 800, and up-converter 900 are also thin (e.g., about 0.22, 0.3, 0.22, and 0.22 inches, respectively). Mounting holes can also be rapidly drilled and tapped through these plates and covers.

FIG. 2D illustrates a cross-sectional view of step 299 in channel 204. FIG. 2E illustrates a cross-sectional view of an iris in channels 204 and 224. FIG. 2F illustrates a top view of an iris in channels 204 and 224. FIGS. 2E and 2F also illustrate the irises in channels 304 and 324 (described later).

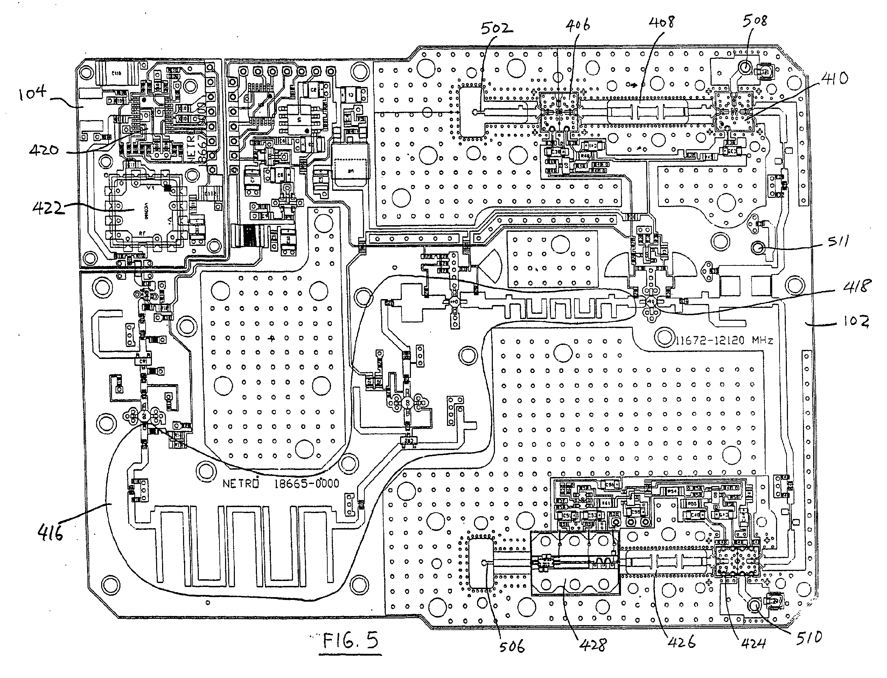

As shown in FIG. 2B, bottom plate 200 includes bores 246, 248, 249, and 250. PCB 102 includes pins 508, 510, 511, and 512 (shown in FIG. 1A and 5) that pass through respective bores 246, 248, 249, and 250 to connect to the IF module via plug-in connections (e.g., conventional PCB connectors). The plug-in connectors are, e.g., RF connectors.

Pin 508 sends receive intermediate frequency (RX IF) signals from PCB 102 to the IF module. Pin 510 receives transmit intermediate frequency (TX IF) signals from the IF module to PCB 102. Pin 511 sends signals from the local oscillator signal of PCB 102 to the IF module for monitoring purposes. PCB 104 includes pin 512 (shown only in FIG. 1A) that passes through bore 250 to connect to the IF module via a plug-in connection. Pin 512 receives a phase-locked loop (PLL) reference signal from the IF module to PCB 104.

Bottom plate 200 includes slots 252 and 254. PCB 202 includes a connector 513 with pins (shown in FIG. 1A) that pass through slot 252 to connect to the IF module and the power supply via plug-in connections. Pins in connector 513 receive power, synthesizer control, and alarm signals from the IF module to PCB 102 (described later). PCB 202 includes a connector 515 with pins (shown in FIG. 1A) that pass through slot 254 to connect to the IF module via plug-in connections. Pins in connector 515 receive power and attenuator control signals from the IF module to PCB 102 (described later).

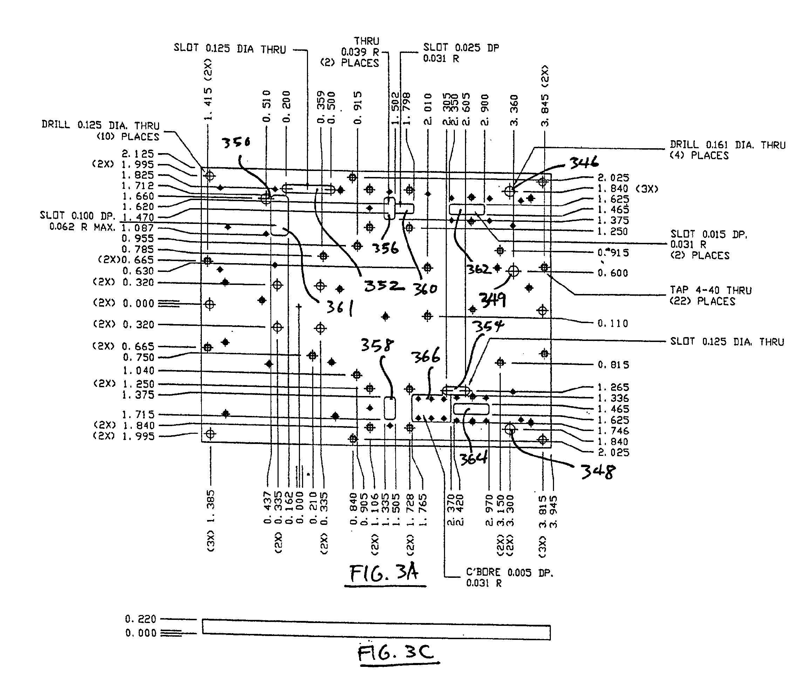

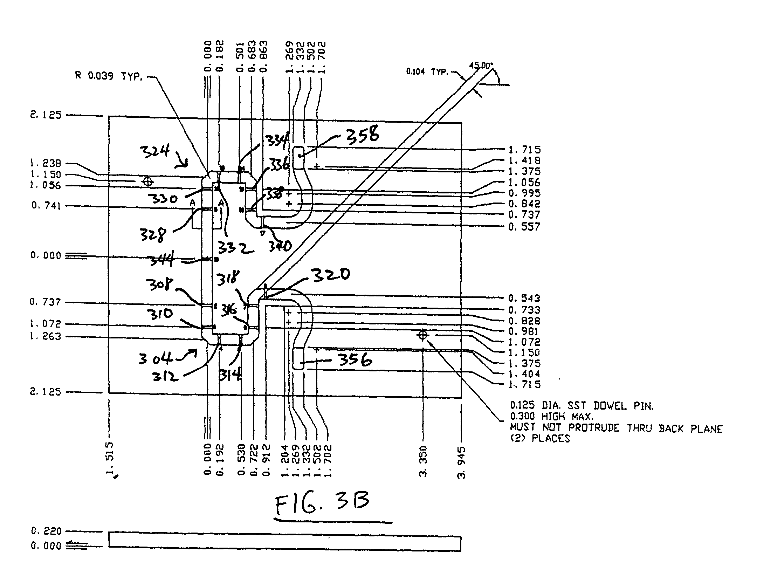

FIGS. 3A, 3B, and 3C respectively illustrate top, bottom, and side views of top plate 300. As shown in FIG. 3A, top plate 300 includes bores 346, 348, and 350 that correspond to respective bores 246, 248, and 250 of bottom plate 200. Top plate 300 also includes slots 352 and 354 that correspond to respective slots 252 and 254 of bottom plate 200.

As shown in FIG. 3B, top plate 300 includes a channel 304 and a channel 324. Channel 304 includes irises 308, 310, 312, 314, 316, 318, and 320. Channel 324 includes irises 328, 330, 332, 334, 336, 338, and 340. In addition, an iris 344 is located above antenna port 202 (FIG. 2A) and between the start of channels 304 and 324. As will be described later, channel 304 serves as part of the first waveguide filter from antenna port 202 to PCB 102 while channel 324 serves as part of the second waveguide filter from PCB 102 to antenna port 202. Dimensions of one embodiment of channels 304 and 324 are provided in the Table 2 below.

**Table 2**

| Iris # | Height (inches) |
|---|---|
| 308 | 0.110 |
| 310 | 0.1165 |
| 312 | 0.118 |
| 314 | 0.118 |
| 316 | 0.118 |
| 318 | 0.1165 |
| 320 | 0.110 |
| 328 | 0.113 |
| 330 | 0.120 |
| 332 | 0.121 |
| 334 | 0.121 |
| 336 | 0.121 |
| 338 | 0.120 |
| 340 | 0.113 |
| 344 | 0.102 |

When top plate 300 is mounted atop bottom plate 200, channels 204 and 304 form the first waveguide filter that couples antenna port 202 to a bore 256 (hereafter "RX port 256"). Channels 224 and 324 form the second waveguide filter that couples a bore 258 (hereafter "TX port 258") to antenna port 202. Irises define the coupling between resonant cavities of the filter. Coupling is fixed and based on the height of the iris pair formed by aligned irises from plate 200 and 300. Tuning screws make up for machining tolerances by providing a way to fine tune cavity resonant frequencies so the desired filter passband, stopband, and return loss characteristics are met. PCB 102 receives and transmits millimeter wave signals through respective RX port 256 and TX port 258.

As understood by one skilled in the art, the dimensions of the waveguide filters are selected to allow specific bands of millimeter wave to pass between the ports. The dimensions of the waveguide filters can be varied to change the specific bands of millimeter wave received and transmitted by assembly 100 (e.g., 24 GHz and up). The dimensions provided in Tables 1 and 2 are exemplary for one embodiment of the first and the second waveguide filers.

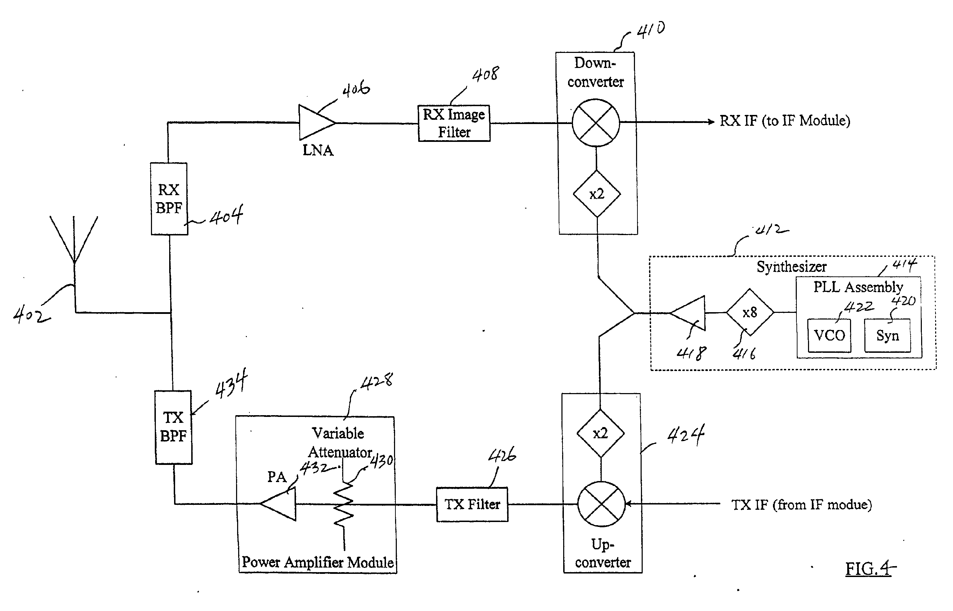

As shown in FIG. 3A, top plate 300 includes depressions 362, 364, and 366. Depressions 362 and 364 provide spaces where respective RX filter 408 (e.g., an RX image filter) and TX filter 426 are suspended (described later in reference to FIGS. 4 and 5). Depression 366 provides a space where a power amplifier (PA) module 428 is mounted (described late in reference to FIGS. 4 and 5). FIG. 3A also illustrates the locations of various mounting holes on top plate 300 for securing it to the remainder of assembly 100.

FIG. 4 illustrates a block diagram of a millimeter wave transceiver implemented on one embodiment of PCB 102, PCB 104, and waveguide filter assembly 106. An antenna 402 receives and passes millimeter wave signals ("RX signals") to an RX band pass filter 404. In some embodiments, the previously described first waveguide filter (consisting of channels 204 and 304) implements RX band pass filter 404. RX band pass filter 404 filters and passes the RX signals to a LNA 406.

LNA 406 amplifies and passes the RX signals to an RX image filter 408.

RX image filter 408 filters and passes the RX signals to a down-converter 410. Down-converter 410 receives the RX signals from RX image filter 408 and a local oscillator signal from a synthesizer 412. Down-converter 410 translates the millimeter wave RX signals to a lower frequency which is passed to the IF module.

Synthesizer 412 generates the local oscillator signal. Synthesizer 412 includes a phase-locked loop (PLL) assembly 414, a frequency multiplier 416, and an amplifier 418 coupled in series. PLL assembly 414 includes a synthesizer circuit 420 and a voltage controlled oscillator (VCO) 422.

Synthesizer circuit 420 locks an oscillator signal generated by VCO 422 to a reference signal from the IF module. The frequency multiplier 416 multiplies the local oscillator signal by, e.g., eight times. Amplifier 418 amplifies the multiplied local oscillator signal.

An up-converter 424 receives TX IF signals from the IF module and the local oscillator signal from synthesizer 412. Up-converter 424 mixes (translates the frequency) the TX IF signals and the local oscillator signal to form millimeter wave signals ("TX signals"). Up-converter 424 passes the TX signals to a TX filter 426.

TX filter 426 filters and passes the TX signals to a power amplifier (PA) module 428. PA module 428 includes a variable attenuator 430 and a PA 432. Variable attenuator 430 attenuates and passes the TX signals to power amplifier 432. PA 432 amplifies and passes the TX signals to a TX band pass filter 434.

In some embodiments, the previously described second waveguide filter (consisting of channels 224 and 324) implements TX band pass filter 434. TX band pass filter 434 filters and passes the TX signals to antenna 402 for transmission.

FIG. 5 illustrates PCB 102 including a hybrid integrated circuit that implements part of the transceiver circuit of FIG. 4 in some embodiments. PCB 102 is, e.g., a 0.020 inch thick printed circuit board without a metal backing (i.e., not a metal backed PCB).

A probe 502 receives the RX signals from RX port 356. Probe 502 is coupled to low noise amplifier (LNA) 406. LNA 406 can be any LNA known in the art. In some embodiments, LNA 406 includes ball grid array (BGA) and is conventionally surface mounted to PCB 102 (e.g., by soldering). LNA 406 is, e.g., a CHA2092 surface mount LNA from United Monolithic Semiconductors of France. LNA 406 is coupled to a planar RX image filter 408. A planar filter is, e.g., a microstrip filter formed on the surface of a printed circuit board.

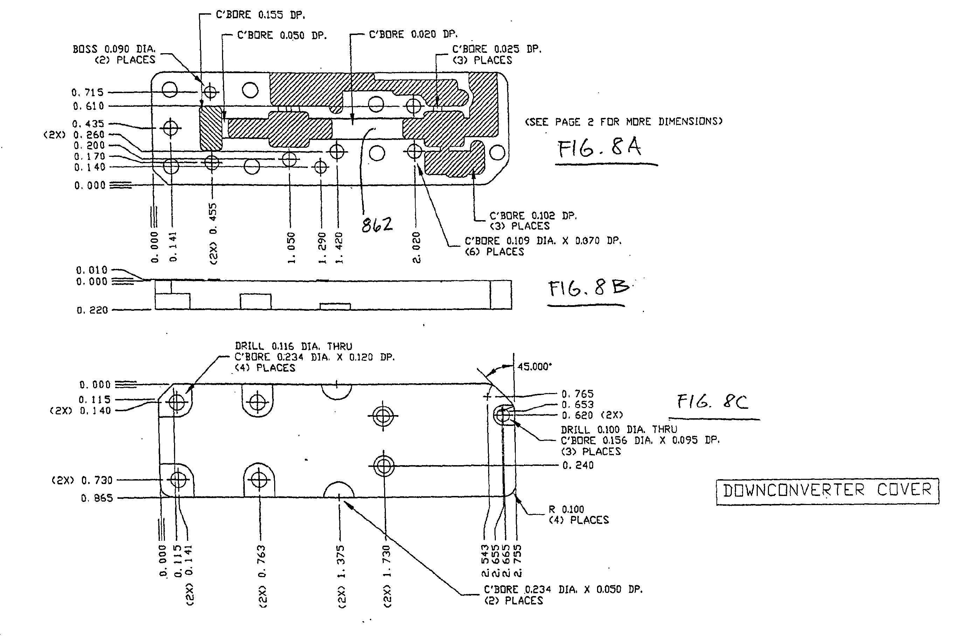

RX image filter 408 is a coupled gap suspended microstrip sandwiched between depression 362 (FIG. 3A) of top plate 300 and a depression 862 (FIG. 8A) in down-converter cover 800 . Suspended microstrip can realize higher Q than grounded microstrip. RX image filter 408 is coupled to down-converter 410.

Down-converter 410 is coupled to a power-divider 504 to receive the local oscillator signal. Down-converter 410 is also coupled to pin 508 of PCB 102. Pin 508 carries the recovered RX IF signal from down-converter 410 to the IF module via a plug-in connection through bore 246 (FIG. 2B). Down-converter 410 can be any down-converter known in the art. In some embodiments, down-converter 410 includes a ball grid array (BGA) package or other surface mount package and is conventionally surface mounted to PCB 102 (e.g., by soldering). Down-converter 410 is, e.g., a HMC265CB1 surface mount mixer from Hittite Microwave Corporation of Chelmsford, Massachusetts. LNA 406, RX image filter 408, and down-converter 410 are collectively known as the receive chain.

Power-divider 504 is also coupled to up-converter 424 to supply the local oscillator signal. Pin 510 of PCB 102 is coupled to up-converter 424 to supply the TX IF signals from the IF module. Pin 510 receives the TX IF signals from the IF module via a plug-in connection through bore 248.

Up-converter 424 can be any up-converter known in the art. In some embodiments, up-converter 424 includes a BGA package or other surface mount package and is conventionally surface mounted to PCB 102. Up-converter 424 is, e.g., a HMC264CB1 surface mount mixer from Hittite Microwave Corporation. Up-converter 424 is coupled to TX filter 426.

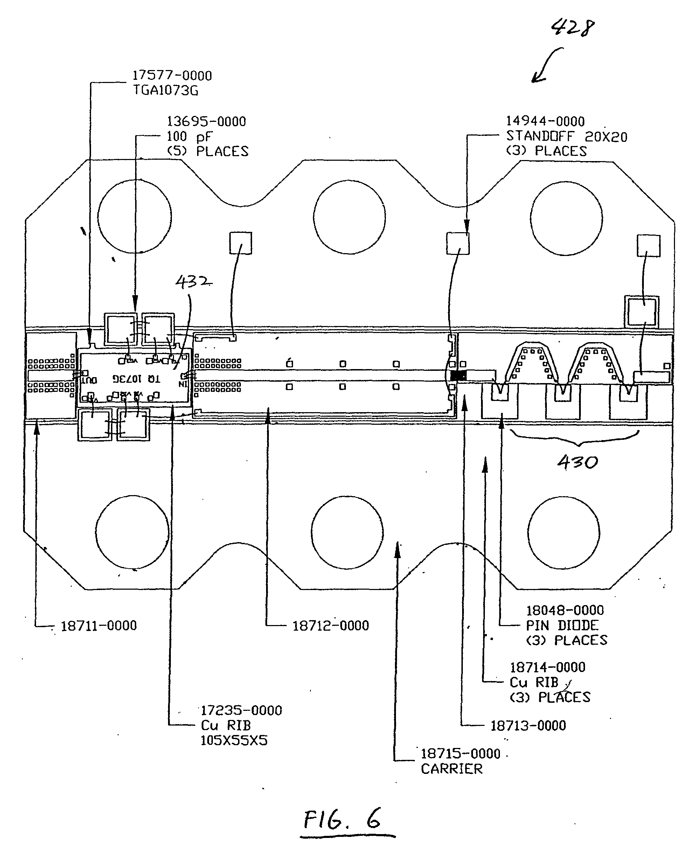

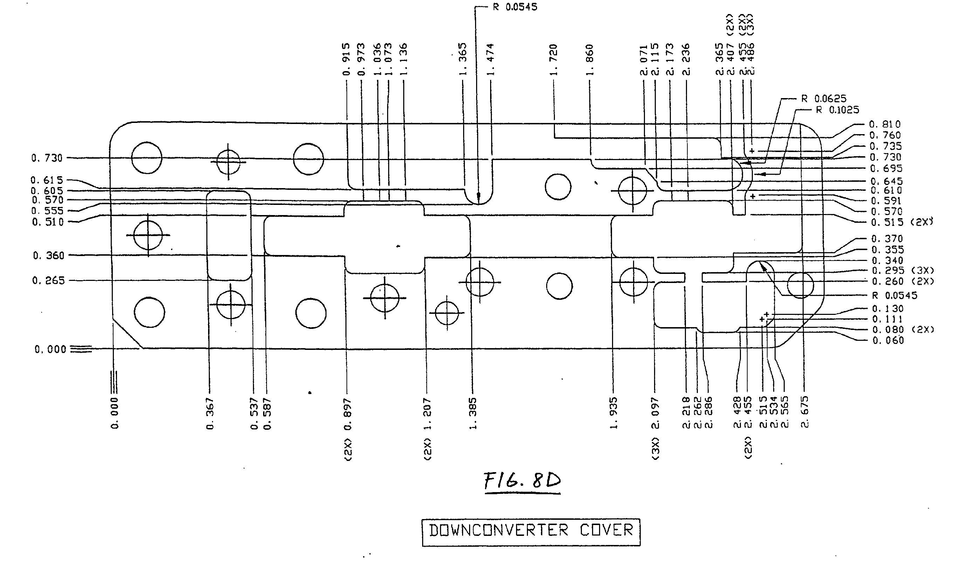

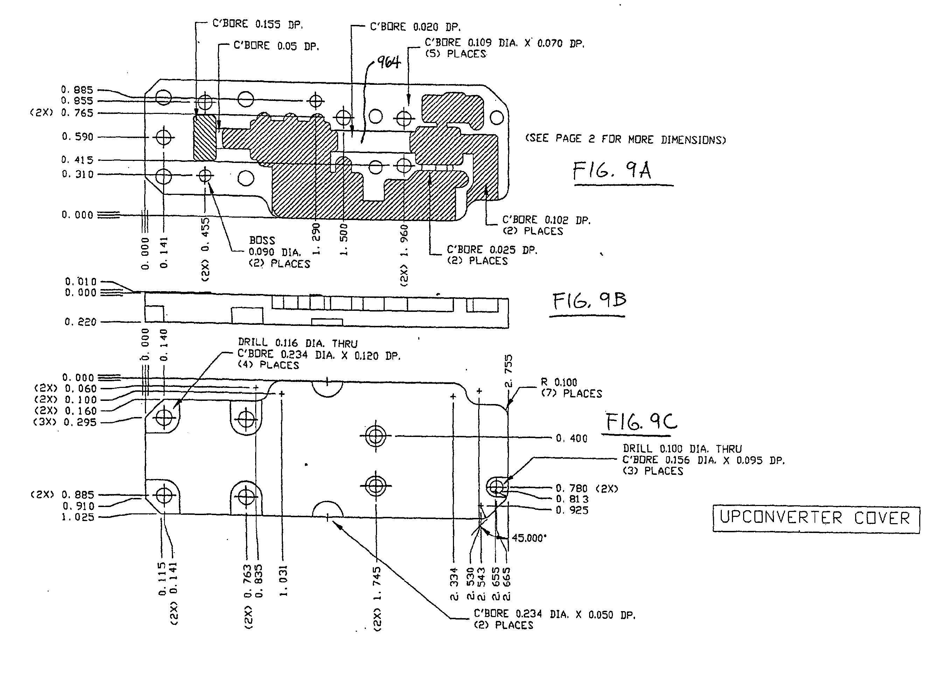

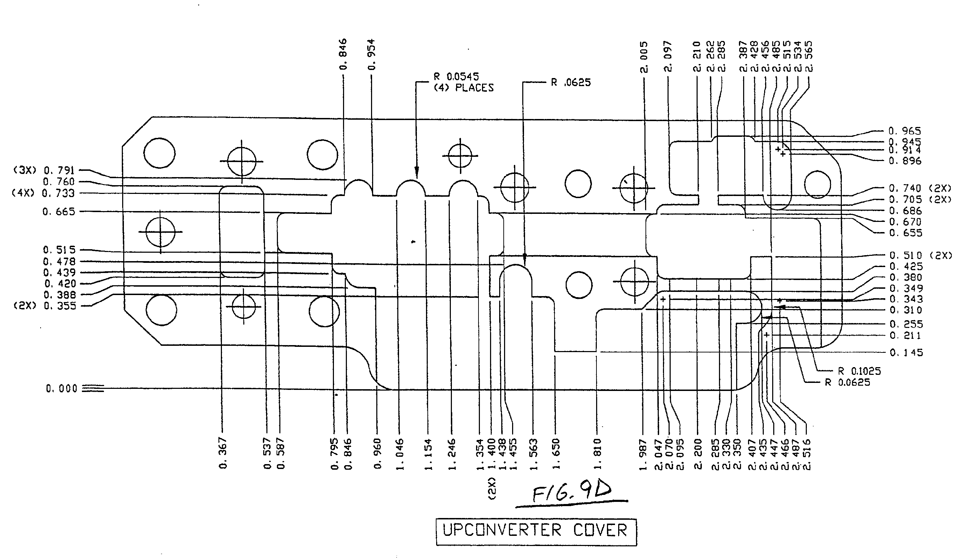

TX filter 426 is a coupled gap suspended microstrip sandwiched between depression 364 (FIG. 3A) of top plate 300 and a depression 964 (FIG. 9A) in up-converter cover 900. TX filter 426 is coupled to PA module 428. As shown in FIG. 6, PA module 428 includes variable attenuator 430 and PA 432. Variable attenuator 430 can be any variable attenuator known in the art. Variable attenuator 430 is, e.g., three conventional pin diodes coupled in series. PA 432 can be any power amplifier known in the art. PA 432 is, e.g., a TGA1073 series power amplifier from TriQuint Semiconductor of Hillsboro, Oregon.

In some embodiments, TX filter 426 is coupled to PA module 428 by gap welded ribbon. In these embodiments, PA module 428 is mounted to top plate 200 through a cutout in PCB 102. In other embodiments, PA module 428 is built into a surface mount package and is conventionally surface mounted onto PCB 102 (e.g., by soldering).

PA module 428 is coupled to a probe 506 that transmits millimeter wave signals through TX port 358. In some embodiments, PA module 428 is coupled to probe 506 by gap welded ribbon. Up-converter 424, TX filter 426, and PA module 428 are collectively known as the transmit chain.

Frequency multiplier 416 is conventionally formed on PCB 102 using passive and active elements including microstrips, diodes, and transistors. Frequency multiplier 416 is coupled to amplifier 418. Amplifier 418 can be any amplifier know in the art. In some embodiments, amplifier 418 is conventionally surface mounted on PCB 102 (e.g., by soldering). Amplifier 418 is, e.g., a conventional field effect transistor. Amplifier 418 is coupled to power-divider 504. As previously described, power divider 504 provides the local oscillator signal to down-converter 410 and up-converter 424. Power divider 504 is conventionally formed on PCB 102 using passive elements including microstrips. Frequency multiplier 416, amplifier 418, and power divider 504 are collectively known as the local oscillator chain.

FIG. 5 also illustrates PCB 104 including integrated circuits that implements part of the transceiver circuit of FIG. 4 in some embodiments. PCB 104 is, e.g., a 0.020 inch thick printed circuit board without a metal back. PCB 104 is connected to PCB 102 by connector 199 to receive control and power signals.

PCB 104 includes PLL assembly 414. PLL assembly 414 includes synthesizer circuit 420 and VCO 422. Synthesizer circuit 420 and VCO 422 can be any conventional synthesizer chip and VCO known in the art. In some embodiments, synthesizer circuit 420 and VCO 422 are conventionally surface mounted to PCB 104. Synthesizer circuit 420 includes, e.g., a UMA1021 frequency synthesizer from Philips Semiconductor of Amsterdam, Netherlands. VCO 422 is, e.g., a VCO190 from Vari-L Company, Inc. of Denver, Colorado. PLL assembly 414 is coupled to frequency multiplier 416 on PCB 102 by a strip of tin plated copper soldered between the PCBs.

In the preferred embodiment, PLL assembly 414 is located on PCB 104 rather than on PCB 102 with the other components. This separation allows PLL assembly 414 to be more carefully manufactured because its components are more sensitive to manufacturing processes including cleaning and handling. This separation also allows low cost replacement of PLL assembly 414 in case of phase or frequency glitches (e.g., a false or spurious signal) over temperature. Phase or frequency glitches originating in PLL assembly 414 can cause bit errors or demodulator synchronization loss in the indoor electronics of digital radio systems.

Although in some embodiments the various elements of the transceiver circuit of FIG. 4 are divided between PCBs 102 and 104, in other embodiments a single printed circuit board can include all the components of the transceiver circuit.

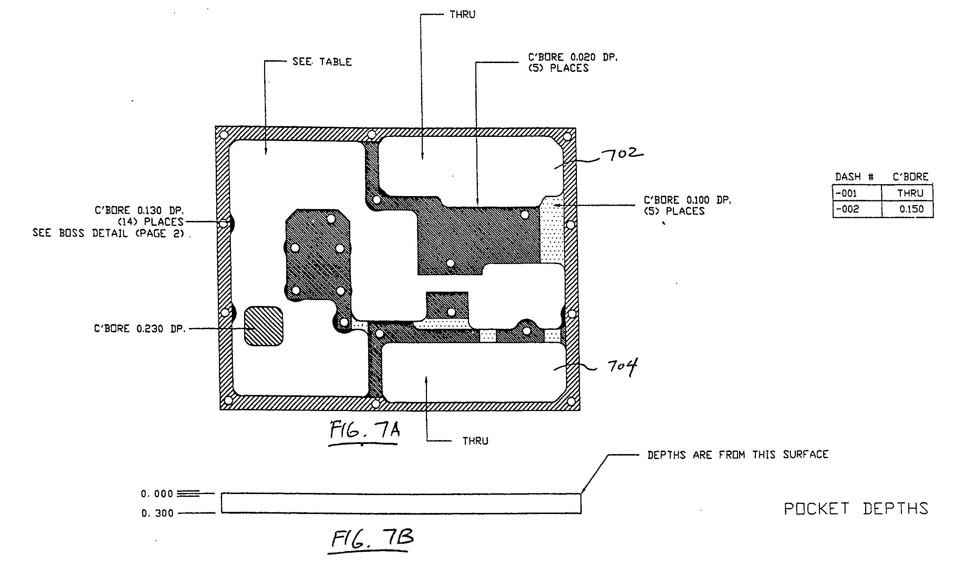

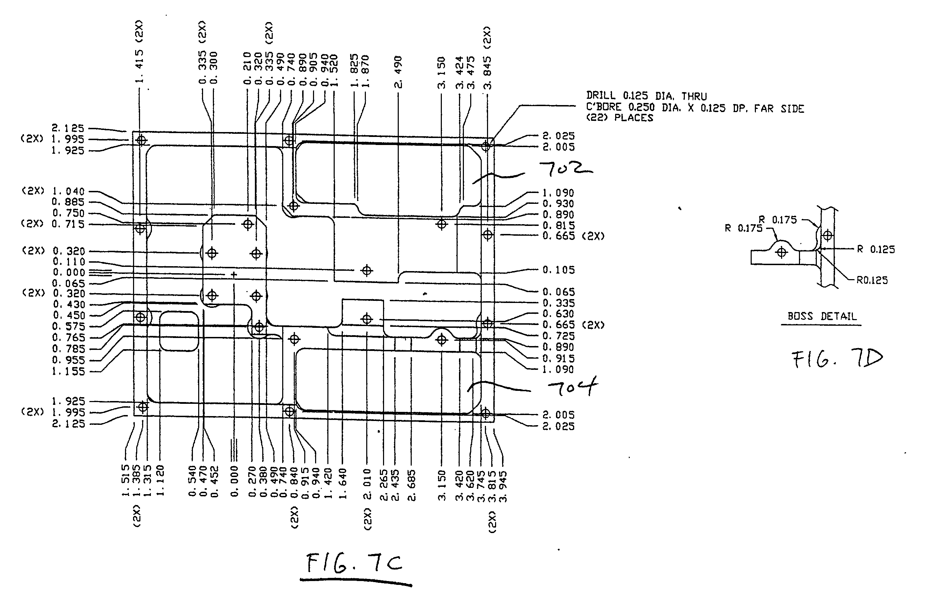

Referring back to FIG. 1, assembly 100 further includes a cover plate 700 that mounts atop waveguide assembly 106 to enclose PCBs 102 and 104. FIGS. 7A, 7B, 7C, and 7D illustrate various views of cover plate 700.

Cover plate 700 includes cutouts 702 and 704. Cutout 702 provides access to probe 502, LNA 406, RX image filter 408, and down-converter 410 (FIG. 5). Cutout 704 provides access to up-converter 424, TX filter 426, PA module 428, and probe 506 (FIG. 5).

Down-converter cover 800 mounts atop PCB 102 through cutout 702 to enclose probe 502, LNA 406, RX image filter 408, and down-converter 410. FIGS. 8A-8D illustrate up-converter plate 800 in some embodiments.

Up-converter cover 900 mounts atop PCB 102 through cutout 704 to enclose up-converter 424, TX filter 426, PA module 428, and probe 506. FIGS. 9A-9D illustrate up-converter plate 900 in some embodiments.

As seen in FIG. 1A, the components of assembly 100 are planarly stacked. Thus, the footprint of millimeter wave transceiver assembly 100 is smaller than the millimeter wave transceiver assembly in the current SRU available from Netro Corporation because PCB 102 and 104 are stacked on top of waveguide filter assembly 106. Reducing the footprint of assembly 100 reduces the cost because complex machining of the various plates 200, 300, 700, 800, and 900 are confined to smaller areas.

In addition, plates 700, 800, and 900 can be cast instead of machined to further reduce the cost because they are separated from plates 200 and 300 that include the waveguides requiring higher precision achieved through machining. Each of plates 200, 300, 700, 800, and 900 are also relatively thin so mounting holes can simply be drilled and tapped all the way through for easy manufacturing (no depth control necessary).
Each of plates 200, 700, 800, and 900 only have features on their top and bottom surfaces (no features on their sides). This allows the use of single axis machining to reduce manufacturing complexity and cost.

Furthermore, the transceiver, composed of one or two planar PCB assemblies stacked on simple metal plates, is tested as an integrated super assembly (including all functions of the components on the PCB assemblies) thereby reducing assembly and testing cost that was previously associated with individual sub-assemblies (e.g. synthesizer, LNA, power amplifier). Transmit and receive electrical parameters such as, but not limited to, passband flatness and return loss can also be improved by employing a highly integrated planar assembly compared to using individual subassemblies separated by relatively long distances and characterized in ideal test sets not representative of the cascade effects of the ultimate fully integrated assembly.

Although the invention has been described with reference to particular embodiments, the description is a representative example and should not be taken as a limitation. Various other adaptations and combinations of features of the embodiments disclosed are possible.

## Claims

1. An integrated radio transceiver comprising:
a waveguide filter assembly;
a first millimeter wave transceiver printed circuit board mounted atop the filter assembly; and
a cover plate mounted atop the waveguide filter assembly and enclosing the first millimeter wave transceiver printed circuit board.

2. The transceiver of claim 1, wherein the waveguide filter assembly comprises a diplexer.

3. The transceiver of claim 1, wherein the waveguide filter assembly comprises a split-E plane waveguide filter.

4. The transceiver of claim 1, wherein the waveguide filter assembly comprises:
a bottom plate, the bottom plate comprising:
an antenna port;
a first channel coupled to the antenna port, the first channel having a first plurality of irises; and
a second channel coupled to the antenna port, the second channel having a second plurality of irises;
a top plate mounted atop the bottom plate, the top plate comprising:
an RX port;
a third channel coupled to the RX port, the third channel having a third plurality of irises;
a TX port; and
a fourth channel coupled to the TX port, the fourth channel having a fourth plurality of irises; and
wherein:
the first channel, the first plurality of irises, the third channel, and the third plurality of irises define a first waveguide filter in communication with the antenna port and the RX port; and
the second channel, the second plurality of irises, the fourth channel, and the fourth plurality of irises define a second waveguide filter in communication with the antenna port and the TX port.

5. The transceiver of claim 4, wherein:
the first channel further comprises a first plurality of screw holes for receiving tuning screws, each of the first plurality of holes being located between two of the first plurality of irises; and
the second channel further comprises a second plurality of screw holes for receiving tuning screws, each of the second plurality of holes being located between two of the second plurality of irises.

6. The transceiver of claim 4 or 5, wherein the first millimeter wave transceiver printed circuit board comprises:
a local oscillator chain comprising:
a frequency multiplier;
an amplifier coupled to the frequency multiplier; and
a power splitter;
a receive chain comprising:
a low noise amplifier coupled to the RX port of the waveguide filter assembly;
an RX image filter coupled to the low noise amplifier; and
a down-converter coupled to the RX image filter and the power splitter, the down-converter having an RX IF line.

7. The transceiver of claim 6, wherein the low noise amplifier and the down-converter are surface mounted on the first printed circuit board.

8. The transceiver of claim 6 or 7, wherein the first printed circuit board is devoid of a metal backing.

9. The transceiver of claims 6, 7 or 8, wherein the RX filter comprises a microstrip suspended above a depression in the top plate.

10. The transceiver of claim 6, 7, 8 or 9, wherein the first printed circuit board further comprises a pin coupled to the RX IF line and the top and the bottom plates further comprise corresponding bores, the pin passing through the bores for a plug-in connection to an IF module.

11. The transceiver of claim 9 or 10, further comprising a down-converter cover, wherein:
the cover plate comprises a cutout that the down-converter cover mounts through to enclose at least the low noise amplifier, the RX image filter, and the down-converter; and
the down-converter cover comprises a depression so the RX image filter is suspended between the depression in the top plate and the depression in down-converter cover.

12. The transceiver of any one of claims 6 to 11, wherein the first printed circuit board further comprises a transmit chain comprising:
an up-converter coupled to the amplifier and a TX IF line;
a TX filter coupled to the up-converter; and
a power amplifier module coupled to the TX filter and the TX port of the waveguide filter assembly, the power amplifier module comprising a variable attenuator and a power amplifier.

13. The transceiver of claim 12, wherein the up-converter is surface mounted to the first printed circuit board.

14. The transceiver of claim 12 or 13, wherein the power amplifier is coupled to the TX filter via gap welded ribbon or surface mounted and attached by solder.

15. The transceiver of any one of claims 6, 7 or 12-14, wherein the first printed circuit board is devoid of a metal backing.

16. The transceiver of any one of claims 12 to 15, wherein TX filter comprises a microstrip suspended above a depression in the top plate.

17. The transceiver of any one of claims 12 to 16, wherein the first printed circuit board further comprise a pin coupled to the TX IF line and the top and the bottom plates further comprise corresponding bores, the pin being placed through the bores for a plug-in connection to an IF module.

18. The transceiver of any one of claims 12 to 17 wherein the first printed circuit board further comprises a pin coupled to the variable attenuator and the top and the bottom plates further comprise corresponding slots, the pin being placed through the slots for a plug-in connection to an IF module to receive a control voltage.

19. The transceiver of any one of claims 16 to 18, further comprising a up-converter cover, wherein:
the cover plate comprises a cutout that the up-converter cover mounts through to enclose at least the up-converter, the TX filter, and the power amplifier module; and
the up-converter cover comprises a depression so the TX filter is suspended between the depression in the top plate and the depression in the up-converter cover.

20. The transceiver of any one of claims 12 to 19, further comprising a second printed circuit board mounted on the waveguide filter assembly, the second printed circuit board comprising:
a synthesizer circuit; and
a voltage control oscillator coupled to the synthesizer and the frequency multiplier of the first printed circuit board.

21. The transceiver of claim 20, wherein the synthesizer circuit and the voltage control oscillator are surface mounted on the second printed circuit board.

22. The transceiver of claim 20 or 21, wherein the second printed circuit board further comprises a pin coupled to the synthesizer circuit and the top and the bottom plates further comprise corresponding slots, the pin being placed through the slots for a plug-in connection to an IF module to receive a PLL reference signal.

23. The transceiver of claim 20, 21 or 22, wherein the first printed circuit board further comprises pins coupled to the synthesizer circuit and the top and the bottom plates further comprise corresponding slots, the pins being placed through the slots for plug-in connections to an IF module to receive control and alarm signals.

24. The transceiver of claim 20, 21, 22 or 23, wherein the first printed circuit board further comprises pins coupled to the elements of the first and the second printed circuit board and the top and the bottom plates further comprises corresponding slots, the pins being placed through the slots for plug-in connections to a power supply to receive a power supply.

25. A method for assembling a transceiver, comprising:
mounting a top plate atop a bottom plate to form a waveguide filter assembly;
mounting a first millimeter wave transceiver printed circuit board atop the waveguide filter assembly; and
mounting a cover plate atop the waveguide filter assembly to enclose the first millimeter wave transceiver printed circuit board.

26. The method of claim 25, further comprising:
forming on the bottom plate:
an antenna port;
a first channel coupled to the antenna port, the first channel having a first plurality of irises; and
a second channel coupled to the antenna port, the second channel having a second plurality of irises;
forming on the top plate:
an RX port;
a third channel coupled to the RX port, the third channel having a third plurality of irises;
a TX port; and
a fourth channel coupled to the TX port, the fourth channel having a fourth plurality of irises; and
wherein:
the first channel, the first plurality of irises, the third channel, and the third plurality of irises define a first waveguide filter in communication with the antenna port and the RX port; and
the second channel, the second plurality of irises, the fourth channel, and the fourth plurality of irises define a second waveguide filter in communication with the antenna port and the TX port.

27. The method of claim 26, further comprising:
forming on the bottom plate a first plurality of screw holes in the first channel for receiving tuning screws, each of the first plurality of holes being located between two of the first plurality of irises; and
forming on the bottom plate a second plurality of screw holes in the second channel for receiving tuning screws, each of the second plurality of holes being located between two of the second plurality of irises.

28. The method of claim 27, further comprising adjusting the tuning screws to tune the waveguide filter assembly.

29. The method of any one of claims 25 to 28, further comprising connecting the first printed circuit board using at least one plug-in connection to an IF module or a power supply.

30. The method of any one of claims 25 to 29, further comprising surface mounting a low noise amplifier and a down-converter on the first printed circuit board.

31. The method of claim 30, further comprising forming a microstrip on the first printed circuit board and placing the microstrip above a depressions in the top plate to form an RX image filter.

32. The method of claim 31, further comprising mounting a down-converter cover through a cutout in the cover plate to enclose at least the low noise amplifier, the RX image filter, and the down-converter on the first printed circuit board, wherein the down-converter cover comprises a depression so the RX image filter is suspended between the depression in the top plate and the depression in the down-converter cover.

33. The method of any one of claims 25 to 32, further comprising surface mounting an up -converter to the first printed circuit board.

34. The method of claim 33, further comprising forming a microstrip on the first printed circuit board and placing the mircostrip over a depression in the top plate to form a TX filter.

35. The method of claim 34, further comprising connecting a power amplifier to the TX filter by gap welded ribbon or solder.

36. The method of claim 34, further comprising mounting an up-converter cover through a cutout in the cover plate to enclose at least the up-converter, the TX filter, and the power amplifier on the first printed circuit board, wherein the up-converter cover comprises a depression so the TX filter is suspended between the depression in the top plate and the depression in the up-converter cover.

37. The method of any one of claims 25 to 36, further comprising mounting a second printed circuit board on the waveguide filter assembly.

38. The method of claim 37, further comprising surface mounting a synthesizer circuit and a voltage control oscillator on the second printed circuit board.

39. The method of claim 37, further comprising connecting the second printed circuit board using at least one plug-in connection to an IF module or a power supply.

40. The method of any one of claims 25 to 39, further comprising mounting the waveguide filter assembly atop an IF module and power supply.

41. The method of any one of claims 32 to 40, further comprising:
machining the top and bottom plates to from a first and a second waveguide; and
casting the cover plate and the down-converter cover.

42. The method of claim 41, further comprising drilling at least one mounting hole through each of the top plate, the bottom plate, the cover plate, and the down-converter cover.

43. The method of any one of claims 36 to 42, further comprising:
machining the top and bottom plates to from a first and a second waveguide; and
casting the cover plate and the up-converter cover.

44. The method of claim 43, further comprising drilling at least one mounting hole through each of the top plate, the bottom plate, the cover plate, and the up-converter cover.

45. The method of any one of claims 25 to 44, further comprising testing the transceiver as a system including the functions provided by a LNA, a up-converter, a down-converter, a power amplifier, a RX image filter, a TX filter, a synthesizer circuit, and a multiplier.
